(19) Europäisches Patentamt / European Patent Office / Office européen des brevets

(11) **EP 2 300 847 B1**

(12) **FASCICULE DE BREVET EUROPEEN**

(45) Date de publication et mention
de la délivrance du brevet:
**20.06.2012 Bulletin 2012/25**

(51) Int Cl.:
*G01S 13/00* (2006.01)       *G01S 13/48* (2006.01)
*G01S 13/28* (2006.01)

(21) Numéro de dépôt: **09772442.1**

(22) Date de dépôt: **30.06.2009**

(86) Numéro de dépôt international:
**PCT/EP2009/058189**

(87) Numéro de publication internationale:
**WO 2010/000742 (07.01.2010 Gazette 2010/01)**

(54) **PROCÉDÉS ET SYSTÈMES D'ÉMISSION CODÉE ET DE RÉCEPTION ANTENNAIRES NOTAMMENT POUR RADAR**

VERFAHREN UND SYSTEME ZUM CODIERTEN AUSSTRAHLEN UND ANTENNENEMPFANG INSBESONDERE FÜR RADAR

METHODS AND SYSTEMS FOR ENCODED BROADCASTING AND ANTENNA RECEPTION, PARTICULARLY FOR RADAR

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **03.07.2008 FR 0854537**

(43) Date de publication de la demande:
**30.03.2011 Bulletin 2011/13**

(73) Titulaire: **Antheop**
**13530 Trets (FR)**

(72) Inventeur: **GOUTELARD, Claude**
**91220 Bretigny Sur Orge (FR)**

(74) Mandataire: **Gevers France**
**23bis, rue de Turin**
**75008 Paris (FR)**

(56) Documents cités:
**WO-A-2007/124460        FR-A- 2 172 188**
**US-A- 3 273 144          US-A- 6 031 485**
**US-A1- 2003 222 778**

**EP 2 300 847 B1**

**Description**

La présente invention concerne de manière générale des procédés et systèmes d'émission et de réception antennaires pour des systèmes de télédétection, notamment le radar. Plus particulièrement, elle a trait à une détection au-delà de l'horizon par ondes de surface et utilisant la combinaison des propriétés de systèmes antennaires et des codages de signaux présentant des propriétés d'orthogonalité.

Un tel procédé trouve application dans la détection de cibles au-delà de l'horizon par les systèmes radars à ondes de surface de type HFSWR ("High Frequency Surface Wave Radar ", en anglais). Un système radar HFWSR est essentiellement limité par le fouillis dû à la surface terrestre, particulièrement dans le cas de la détection de navires pour lesquels l'écho utile est localisé, dans l'espace distance-doppler, dans le fouillis de mer, appelé par les spécialistes "spectre de mer". Le fouillis, qu'il soit dû à la mer (spectre de mer) où à une autre cause sera appelé ici fouillis. Les échos de cibles se trouvent souvent masqués par le fouillis dont l'importance est en relation directe avec la dimension de la cellule radar définie par les dimensions géométriques du volume dans lequel les ondes radars susceptibles d'être diffusées peuvent, à un instant donné, participer à la formation du signal reçu par le système radar.

Compte tenu des possibilités matérielles d'implantation des systèmes radars HFSWR, les cellules radars demeurent, dans la technique antérieure, trop grandes pour atteindre les objectifs souhaités par les utilisateurs. Pour atteindre ces objectifs, il est nécessaire de réduire les dimensions de ces cellules d'un facteur de quelques dizaines à quelques centaines.

Pour réduire les dimensions de la cellule de résolution radar, la technique antérieure conduit à augmenter les dimensions des systèmes antennaires de réception, qui sont les plus encombrants, lorsque cela est possible, ce qui conduit à des systèmes géométriquement étendus et à l'utilisation d'un grand nombre d'antennes. Les limitations de cette extension sont apportées par plusieurs facteurs pouvant intervenir séparément ou simultanément et qui constituent des inconvénients de la technique antérieure : l'encombrement au sol, les dimensions du porteur dans les systèmes mobiles, la cohérence du front d'onde au site de réception, la complexité des traitements liée au nombre d'antennes.

Par ailleurs dans un autre domaine relatif à l'allocation de ressources dans un réseau de communication à accès multiple à division d'espace SDMA-MIMO, la demande de brevet WO 2007/124460 A proposent des ensembles d'antennes d'émission associés respectivement à des diagrammes de rayonnement qui sont répartis dans l'espace sensiblement sans chevauchement et qui sont associés à des signaux différents.

L'invention vise à remédier aux inconvénients précités et plus particulièrement à réduire les dimensions de cellules de résolution radars d'un facteur pouvant varier de 50 environ à 500 environ pour améliorer les capacités de détection des systèmes radars sans imposer au système antennaire de réception des dimensions importantes.

A cette fin, un procédé de télédétection selon l'invention pour émettre des signaux de base présentant des propriétés d'orthogonalité par des antennes d'émission dans un système d'émission et recevoir les signaux de base par plusieurs antennes de réception dans un système de réception, est tel que caractérisé selon la revendication 1.

L'invention concerne aussi des systèmes d'émission et de réception pour de la télédétection comprenant plusieurs antennes d'émission pour émettre des signaux de base présentant des propriétés d'orthogonalité et plusieurs antennes de réception pour recevoir les signaux de base. Le système d'émission est caractérisé en ce qu'il comprend un moyen pour former des diagrammes de rayonnement d'émission pour émettre respectivement les signaux de base par toutes les antennes d'émission, chaque diagramme de rayonnement d'émission étant associé à un signal de base respectif à émettre par toutes les antennes d'émission et comprenant des lobes de rayonnement principaux alternés avec des lobes de rayonnement secondaires, les lobes de rayonnement principaux des diagrammes de rayonnement d'émission étant sensiblement alternés et juxtaposés dans l'espace. Le système de réception est caractérisé en ce qu'il comprend un moyen pour former des diagrammes de rayonnement de réception dans une zone de réception afin de recevoir les signaux de base par chacune des antennes de réception et sélectionner les lobes principaux du diagramme de rayonnement d'émission associé à un signal de base grâce aux propriétés d'orthogonalité des signaux de base, le nombre de diagrammes de rayonnement de réception étant au moins égal au nombre de cellules qui sont contenues dans la zone de réception, qui sont couvertes par les lobes de rayonnement principaux de l'un des diagrammes de rayonnement d'émission et qui sont situées à une distance bistatique donnée des systèmes d'émission et de réception.

L'invention est applicable dans les techniques radars en général, ainsi que dans les sondages de canaux, les systèmes de détection sonar, les systèmes de radiolocalisation ou la radiographie d'organes dans des applications médicales ou de structures dans les applications industrielles. Toutes les applications précitées sont basées sur l'analyse de cellules spatiales dont il est nécessaire de réduire les dimensions pour accroître les performances.

Le système d'émission antennaire est apte à produire un rayonnement radioélectrique caractérisé, par exemple dans un plan prédéterminé, par exemple horizontal passant par le système d'émission et le système de réception, par des maxima de densité surfacique d'énergie rayonnée qui sont sensiblement juxtaposés selon une répartition prédéterminée dans le plan prédéterminé de manière à couvrir une zone de réception surveillée qui peut couvrir partiellement ou totalement le plan prédéterminé. Les maxima correspondent aux lobes de rayonnement principaux associés aux signaux de base radioélectriques. Pour chaque signal de base, les maxima d'énergie rayonnée sont compris dans des secteurs angulaires coniques dont le sommet est le site d'émission et qui sont répartis régulièrement et périodiquement dans l'espace. Les maxima d'énergie du signal de base sont séparés par des secteurs angulaires coniques de rayonnement minimum qui correspondent aux lobes de rayonnement secondaires où la densité surfacique d'énergie est très inférieure à celle existant dans les secteurs angulaires coniques où sont situés les maxima de densité d'énergie correspondant aux lobes de rayonnement principaux. Le diagramme de rayonnement associé à un signal de base dans le plan prédéterminé est appelé "diagramme feuilleté".

Le système d'émission antennaire peut produire deux ou plus de diagrammes de rayonnement feuilletés différents qui sont sensiblement juxtaposés, c'est-à-dire disjoints, ou accolés, ou non disjoints, en pratique avec des lobes principaux juxtaposés ou se chevauchant sensiblement latéralement, afin d'illuminer ensemble depuis le site d'émission où est installé le système d'émission, la totalité d'une zone de réception surveillée par un système de réception antennaire selon l'invention. Les diagrammes de rayonnement d'émission sont distincts en azimut et zénith et ont des lobes de rayonnement principaux sécants de la zone de réception surveillée.

Les signaux de base peuvent être numériques ou analogiques et doivent posséder des propriétés d'orthogonalité spécifiques pour améliorer la détermination des cellules radars dans le système de réception. A cet égard, les antennes d'émission peuvent émettre les signaux de base simultanément et périodiquement, ou successivement et cycliquement dans des intervalles les séparant temporellement deux à deux. Dans le système de réception, les signaux de base, en tant que signaux de référence, sont respectivement associés à des opérateurs mathématiques respectifs, qui peuvent être, par exemple, des corrélations.

Selon une première propriété d'orthogonalité, les signaux de base sont orthogonaux deux à deux. Ceci signifie que lorsque le système de réception reçoit tout ou partie des signaux de base auxquels est appliqué un opérateur mathématique associé à un signal de base respectif choisi comme signal de référence, le résultat de l'application est indépendant de la présence ou de l'absence de tout ou partie des signaux de base reçus autres que le signal de référence.

Selon une deuxième propriété d'orthogonalité, chaque signal de base est orthogonal à lui-même décalé temporellement. Ceci signifie que lorsque le système de réception reçoit une réplique d'un signal de base à laquelle est appliqué l'opérateur mathématique associé au signal de base respectif choisi comme signal de référence et qui est décalée dans le domaine temporel d'une valeur non nulle par rapport au signal de référence, le résultat de l'application est nul quel que soit le décalage temporel non nul.

Ces deux propriétés d'orthogonalité sont utilisées pour discriminer les signaux de base dans les moyens pour former les diagrammes de réception dans le système de réception. A cet égard, le système de réception peut comprendre des moyens pour pondérer des signaux captés par les antennes de réception, le signal capté par une antenne de réception étant pondéré pour produire autant de signaux pondérés que de diagrammes de rayonnement de réception, et des moyens pour discriminer en signal de base et distance bistatique dans l'ensemble des signaux pondérés, d'une part des cellules ayant une distance bistatique constante, d'autre part pour une distance bistatique donnée, des cellules associées à l'un des signaux de base discriminables par leurs propriétés d'orthogonalité.

Le signal global émis par l'ensemble des antennes d'émission et réparti dans l'espace est défini par des diagrammes de rayonnement d'émission feuilletés correspondant respectivement à des signaux de base illuminant chacun l'espace. Un diagramme feuilleté est dit associé au signal de base respectif dont le rayonnement est défini par le diagramme feuilleté.

Du site de réception où se trouve le système de réception, il apparaît un pavage lacunaire de l'espace défini par des cellules radars et créé par les diagrammes de rayonnement feuilletés associés aux signaux de base utilisés et par les temps de propagation bistatiques entre le site d'émission et le site de réception. Pour un temps de propagation bistatique donné, ou pour une distance bistatique donnée, entre le site d'émission et le site de réception dans un système radar bistatique, le pavage correspond à des cellules radars de propagation situées sur un demi-ellipsoïde sur lequel le temps de propagation bistatique donné égal à la somme du temps de propagation entre le site d'émission et une cellule radar et du temps de propagation entre la cellule radar et le site de réception est constant. Dans le système de réception, les cellules radars sont distinguables les unes des autres par rapport aux diagrammes d'émission feuilletés sensiblement disjoints en appliquant la première propriété d'orthogonalité, et à temps de propagation bistatique constant sur un demi-ellipsoïde en appliquant la deuxième propriété d'orthogonalité. Les cellules radars qui, pour un signal de base donné choisi comme signal de référence donné et pour un temps de propagation bistatique donné, ne peuvent être distinguées, constituent des cellules radars siamoises associées au signal de référence donné et au temps de propagation bistatique donné et constituent dans la zone de réception surveillée un pavage fortement lacunaire de l'espace géométrique sur une partie du demi-ellipsoïde associé au temps de propagation bistatique donné.

Le système antennaire de réception sépare des cellules radars siamoises qui sont associées à un signal de base donné et à un temps de propagation bistatique donné et qui sont réparties sur un pavage fortement lacunaire, au moyen de diagrammes de rayonnement de réception différents dans la zone de réception surveillée. La distance angulaire entre deux cellules radars siamoises associées au signal de base donné et au temps de propagation bistatique donné et vues du site de réception est importante. Les cellules radars siamoises associées au signal de base donné et au temps de propagation bistatique donné constituent un ensemble discret dans la zone de réception surveillée suivant des directions azimutales et zénithales sous laquelle les cellules radars siamoises de cette zone sont vues du site de réception. Ces directions azimutales et zénithales localisent des cellules radars siamoises associées au signal de base donné et au temps de propagation bistatique donné dans le système de réception. Le système antennaire de réception forme simultanément P diagrammes de rayonnement de réception, chaque diagramme de rayonnement de réception pouvant ou non posséder au moins un lobe de rayonnement principal contenu dans la zone de réception.

Les diagrammes de rayonnement de réception peuvent être feuilletés comme les diagrammes d'émission. Ainsi selon l'invention, des diagrammes de rayonnement comprenant chacun des lobes de rayonnement principaux alternés avec des lobes de rayonnement secondaires peuvent être formés par l'une des pluralités des antennes d'émission et des antennes de réception, ou bien par les deux pluralités d'antennes, les lobes de rayonnement principaux associés aux signaux de base étant sensiblement juxtaposés dans le plan prédéterminé.

Si M est le nombre de cellules radars siamoises contenues dans la zone de réception surveillée et situées à l'intersection de secteurs angulaires couverts par des lobes de rayonnement principaux du diagramme de rayonnement d'émission associé au signal de base donné et d'un demi-ellipsoïde défini par le temps de propagation donné entre le système d'émission et une cellule radar et du temps de propagation entre la cellule et le système de réception, le nombre P de diagrammes de rayonnement de réception formés par le système antennaire de réception est au moins égal à M, c'est-à-dire est égal ou supérieur à M.

Le signal qui peut être renvoyé par chaque cellule est déterminé en utilisant les propriétés d'orthogonalité qui permettent par l'opérateur mathématique associé au signal de base donné d'abord de discriminer par la première propriété d'orthogonalité les cellules associées à des signaux de base différents du signal de base donné choisi comme signal de référence, puis de séparer par la deuxième propriété d'orthogonalité les cellules associées au signal de base donné et ayant un temps de propagation bistatique donné de celles associées au signal de base donné et ayant des temps de propagation bistatiques différents du temps de propagation bistatique donné. Les cellules radars, dites cellules siamoises, associées au signal de base donné et ayant le même temps de propagation bistatique donné sont séparées par la scrutation de la zone de réception par des diagrammes de réception différents du système antennaire de réception qui sont en nombre égal ou supérieur au nombre de cellules radars dans la zone de réception.

L'espace couvert par chaque signal de base est exploré par le système antennaire de réception en faisant varier successivement tous les temps de propagation bistatique pour couvrir tout l'espace illuminé par le signal de base à l'intersection avec la zone de réception.

L'exploration complète de la zone de réception surveillée est obtenue en répétant les opérations précitées pour tous les signaux de base utilisés.

Enfin, l'invention se rapporte à des programmes d'ordinateur aptes à être mis en oeuvre respectivement dans un système d'émission comprenant plusieurs antennes d'émission pour émettre des signaux de base présentant des propriétés d'orthogonalité et dans un système de réception comprenant plusieurs antennes de réception pour recevoir les signaux de base. Lesdits programmes sont caractérisés en ce qu'ils comprennent des instructions qui, lorsque les programmes sont exécutés dans le système d'émission et le système de réception, mettent en ouvre le procédé d'émission et de réception selon l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 montre schématiquement dans un plan prédéterminé horizontal un diagramme de rayonnement d'émission feuilleté et une zone de réception en secteur angulaire pour un système radar bistatique selon l'invention ;
- la figure 2 est un bloc-diagramme schématique d'un système d'émission antennaire selon l'invention ;
- la figure 3 est diagramme de rayonnement d'émission feuilleté produit par le système d'émission selon la figure 2 ;
- la figure 4 est analogue à la figure 1, mais avec six diagrammes de rayonnement d'émission feuilletés juxtaposés, deux lobes principaux de chaque diagramme de rayonnement étant seulement montrés ;
- la figure 5 est un bloc-diagramme schématique d'un système de réception selon l'invention ;
- la figure 6 est un bloc-diagramme schématique d'un étage récepteur à discriminateurs dans le système de réception ;
- la figure 7 est analogue à la figure 1, mais avec un diagramme de rayonnement de réception feuilleté ; et
- la figure 8 est un diagramme temporel d'émissions cycliques de signaux de base dans une autre réalisation du système d'émission.

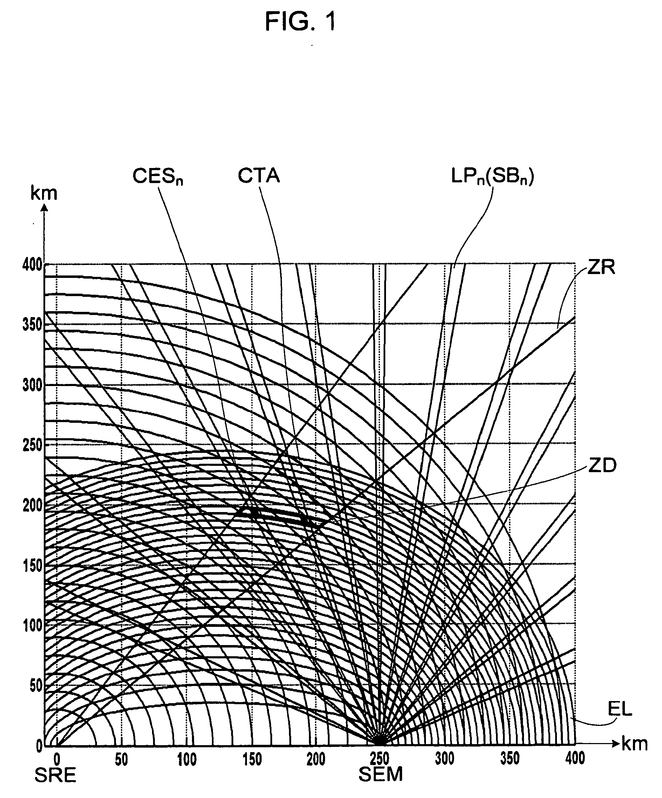

En référence aux figures 1, 2 et 5, un système radar bistatique SEM-SRE, par exemple un système radar à onde de surface HFSWR, par exemple pour une détection de cibles par onde de surface au-delà de l'horizon, comprend un système d'émission SEM à plusieurs antennes d'émission AE et un système de réception SRE à plusieurs antennes de réception AR. Le système d'émission est localisé sur un site d'émission situé par exemple à D = 250 km du site de réception où est localisé le système de réception.

Le système d'émission SEM produit au moins un signal radioélectrique défini par un diagramme de rayonnement d'émission feuilleté associé à un signal de base $SB_n$, lorsque ce dernier est appliqué simultanément sous des conditions prédéterminées aux antennes d'émission AE, comme on le verra plus loin. Le diagramme de rayonnement d'émission feuilleté associé au signal de base $SB_n$ est défini essentiellement par des lobes de rayonnement principaux $LP_n$ qui sont seulement montrés à la figure 1. Cependant le système d'émission SEM produit des lobes de rayonnement principaux $LP_1$ à $LP_N$ de N diagrammes de rayonnement d'émission feuilletés associés respectivement à des signaux de base $SB_1$ à $SB_N$ présentant des propriétés d'orthogonalité entre eux, avec $1 \leq n \leq N$. Les lobes principaux $LP_1$ à $LP_N$ apparaissent comme des secteurs angulaires coniques ayant un angle au sommet prédéterminé dans un plan de rayonnement prédéterminé, par exemple horizontal passant par le site du système d'émission SEM. La figure 1 est située dans un plan horizontal de rayonnement passant à la fois par les sites d'émission et de réception.

Le système d'émission SEM de l'invention produisant des diagrammes de rayonnement feuilletés peut présenter une structure antennaire appartenant à la classe connue des réseaux antennaires à diagrammes de rayonnement ambigus, dits aussi réseaux ambigus. Par exemple, un réseau ambigu est obtenu à partir d'un réseau linéaire de S antennes d'émission $AE_1$ à $AE_S$, avec $2 \leq S$, dans lequel les antennes sont séparées les unes des autres par une distance DA supérieure à $\lambda/2$, où $\lambda$ est la longueur d'onde d'une porteuse modulée par les signaux de base émis.

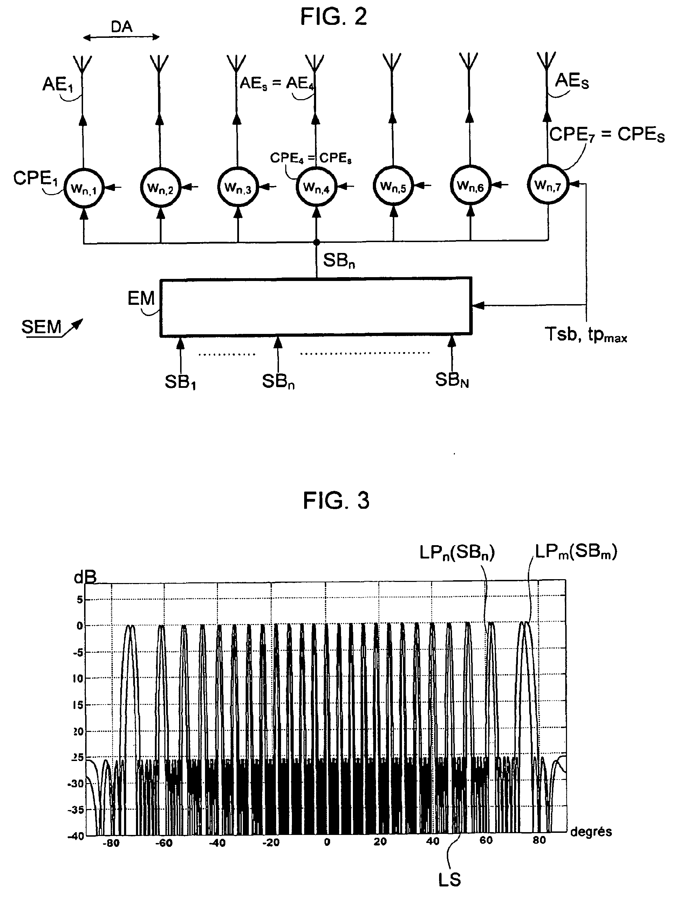

Dans la figure 2 relative à une première réalisation du système d'émission SEM sont seulement représentés schématiquement des blocs fonctionnels qui assurent des fonctions utiles à la compréhension de l'invention et ayant un lien avec celle-ci. Ces blocs fonctionnels peuvent correspondre à des modules matériels dédiés ou programmables et/ou à des modules logiciels implémentés dans au moins un microprocesseur.

Le système d'émission SEM comprend S = 7 antennes $AE_1$ à $AE_S = AE_7$ régulièrement espacées de DA = 12,5 $\lambda$ par exemple. Le système d'émission SEM comprend en outre des étages émetteurs EM et des circuits pondérateurs $CPE_1$ à $CPE_s$ interconnectés respectivement entre la sortie d'un distributeur de puissance dans des étages émetteurs EM et des entrées des antennes $AE_1$ à $AE_S$. Un circuit pondérateur $CPE_s$, avec $1 \leq s \leq S$, pondère l'amplitude et/ou la phase des signaux de base $SB_1$, ... $SB_n$,... $SB_N$ distribués respectivement par les étages émetteurs EM avec des coefficients de pondération complexes respectifs $w_{1,s}$,... $w_{n,s}$,... $w_{N,s}$. Le signal de base $SB_n$ distribué aux antennes $AE_1$ à $AE_S = AE_7$ est pondéré respectivement par des coefficients de pondération complexes $w_{n,1}$ à $w_{n,S} = w_{n,7}$ dans les circuits pondérateurs $CPE_1$ à $CPE_s$ afin que les antennes $AE_1$ à $AE_S$ émettent un signal radioélectrique caractérisé par un diagramme de rayonnement feuilleté selon l'invention et associé au signal de base $SB_n$. Ceci assure une protection suffisamment importante sur les lobes secondaires des diagrammes et permet l'orientation des lobes principaux $LP_n$ associés au signal de base $SB_n$. Plus la distance DA entre les antennes est grande, plus le nombre de lobes principaux des diagrammes de rayonnement feuilletés augmente. Plus le nombre d'antennes est grand, plus le nombre N de diagrammes de rayonnement d'émission feuilletés augmente.

Dans cette première réalisation, les signaux de base sont constitués par des familles de signaux de base orthogonaux à corrélation parfaite ou quasi parfaite qui sont émis par le système d'émission SEM simultanément par addition des signaux de base ou simultanément par entrelacement des signaux de base.

Dans la figure 3 sont juxtaposés deux diagrammes de rayonnement feuilletés à lobes principaux $LP_n$ et $LP_m$ respectivement associés à deux signaux de base distincts $SB_n$ et $SB_m$ auxquels ont été appliqués des coefficients de pondération complexes $w_{n,1}$ à $w_{n,S}$ et $w_{m,1}$ à $w_{m,S}$ par les circuits pondérateurs $CPE_1$ à $CPE_S$. La protection sur les lobes secondaires LS est de 26 dB. Le diagramme à lobes principaux $LP_n$ est orienté pour placer un lobe principal suivant la direction 0 degré. L'autre diagramme à lobes principaux $LP_m$ est orienté pour placer un lobe principal suivant la direction 1,2 degré.

L'homme du métier comprendra que ces diagrammes de rayonnement lacunaires peuvent être obtenus par d'autres systèmes d'émission dont les antennes présentent d'autres répartitions linéaires, surfaciques ou volumiques, régulières ou irrégulières. Par exemple, le système d'émission peut comprendre un réseau d'antennes suivant une structure irrégulière telle qu'une structure fractale selon l'article "THÉORIE FRACTALE DES GRANDS RÉSEAUX D'ANTENNES LACUNAIRES" C. GOUTELARD, AGARD Conference Proceedings 528, Radiolocation Techniques, Londres, 1-5 juin 1992.

Le système de réception antennaire SRE surveille une ou plusieurs zones de réception. Dans la figure 1, il est supposé que le système de réception ne surveille qu'une seule zone de réception conique ZR qui est sécante d'au moins l'un des lobes de rayonnement principaux du diagramme de rayonnement d'émission feuilleté associé à chaque signal de base $SB_n$. En pratique, la zone de réception ZR est sécante de plusieurs lobes de rayonnement principaux associés à chaque signal de base.

Dans la figure 1 sont également représentées partiellement en traits fins les traces elliptiques parallèles de demi-ellipsoïdes EL ayant pour foyers le système d'émission SEM et le système de réception SRE. Chaque demi-ellipsoïde EL est défini par une surface sur laquelle toute cellule radar CE reçoit un signal radioélectrique du système d'émission SEM et est susceptible de le diffuser vers le système réception SRE pendant un temps de propagation bistatique donné respectif tp, correspondant à une distance bistatique. Le temps de propagation bistatique donné tp égal à la somme du temps de propagation entre le système d'émission SEM et la cellule radar CE et du temps de propagation entre la cellule radar CE et le système de réception SRE est constant pour toute cellule radar sur la surface de l'ellipsoïde EL.

Les demi-ellipsoïdes deviennent des demi-sphères lorsque le système radar SEM-SRE est monostatique, c'est-à-dire les systèmes d'émission et de réception sont localisés sur le même site, ou des demi-ellipsoïdes presque comme des demi-sphères lorsque les systèmes d'émission et de réception sont proches de telle sorte que la distance les séparant demeure petite vis-à-vis des distances des cellules contenues dans la zone de réception surveillée.

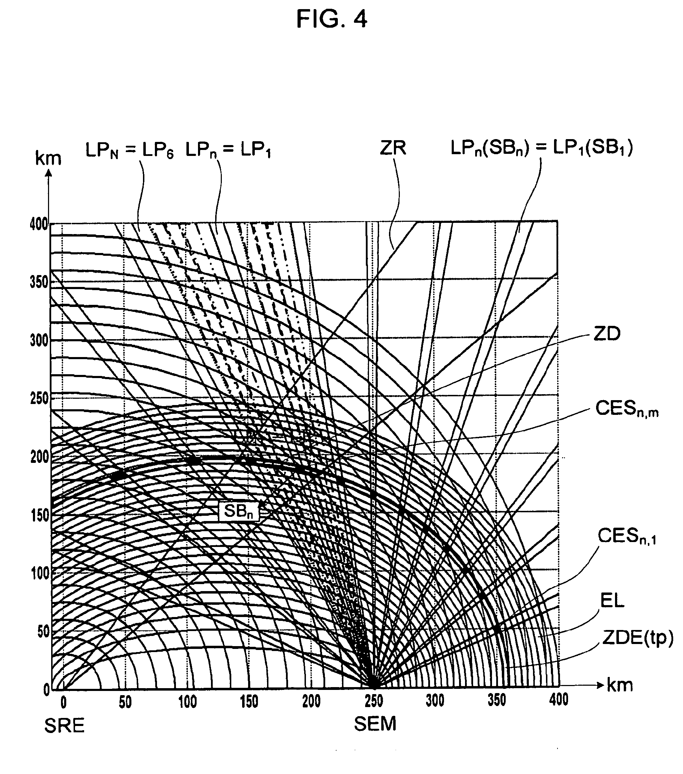

Des zones de résolution distance étendues ZDE dont une est représentée à la figure 4 sont définies entre les demi-ellipsoïdes EL tels que la différence des temps de propagation bistatiques soit égale à la résolution temporelle, par exemple 1,5 km, du radar. L'intersection d'une zone de résolution distance étendue ZDE et de la zone de réception ZR détermine une zone de résolution distance surveillée ZD correspondant à un temps de propagation bistatique respectif $tp$ et aussi à une résolution temporelle choisie.

Les intersections d'une zone de résolution distance étendue ellipsoïdale ZDE et des lobes de rayonnement principaux $LP_n$ définissent des cellules radars siamoises $CES_n$ associées au signal de base $SB_n$ et au temps de propagation bistatique $tp$ définissant la zone ZDE, comme représenté à la figure 4. Les cellules radars siamoises $CES_n$ associées au signal de base $SB_n$ et au temps de propagation bistatique $tp$ et localisées dans la zone de réception ZR sont des zones géographiques communes à la zone de résolution distance ZD, aux lobes principaux $LP_n$ du diagramme feuilleté associé au signal de base $SB_n$ et à la zone de réception ZR du diagramme de rayonnement du système de réception antennaire SRE, comme représenté à la figure 1.

Le système radar de l'invention délimite les cellules radars siamoises $CES_n$ particulièrement par la délimitation spatiale apportée par les lobes principaux $LP_n$ du diagramme d'émission feuilleté associé au signal de base $SB_n$ dans le système d'émission antennaire SEM, de la zone de réception ZR du système de réception antennaire SRE et par l'orthogonalité des signaux de base prévus dans le système d'émission.

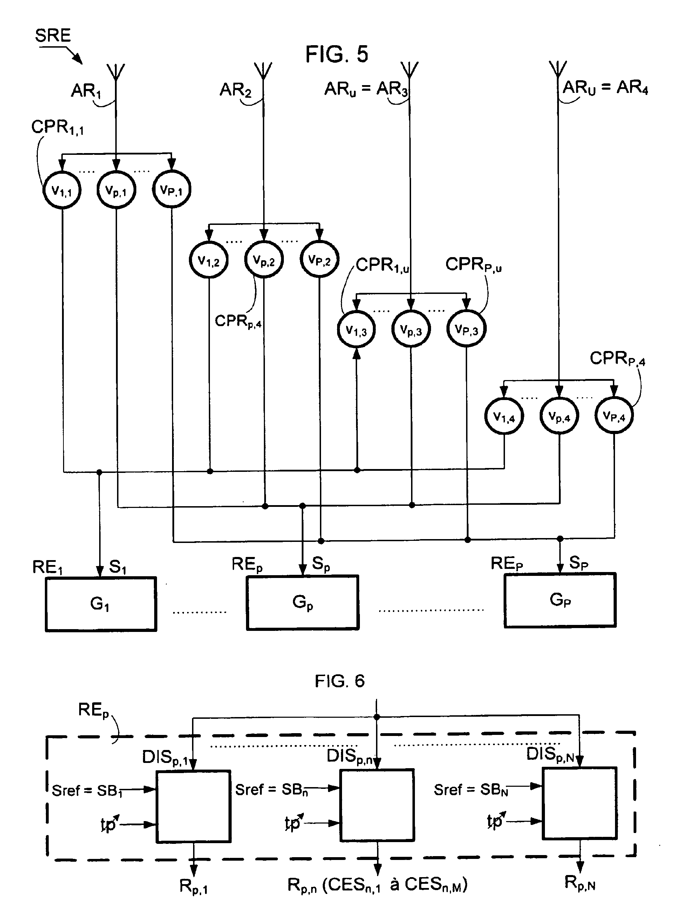

En référence à la figure 5 relative à une réalisation du système de réception SRE sont seulement représentés schématiquement des blocs fonctionnels qui assurent des fonctions utiles à la compréhension de l'invention et ayant un lien avec celle-ci. Ces blocs fonctionnels peuvent correspondre à des modules matériels dédiés ou programmables et/ou à des modules logiciels implémentés dans au moins un microprocesseur.

le système de réception SRE comprend plusieurs antennes de réception, par exemple U = 4 antennes $AR_1$ à $AR_4$ et P étages récepteurs $RE_1$ à $RE_P$ associés respectivement à P diagrammes d'antenne de réception pour discriminer des cellules siamoises sur un demi-ellipsoïde EL relatives à chaque diagramme d'émission feuilleté et donc à chaque signal de base $SB_n$. Dans le système de réception SRE, chaque antenne de réception $AR_u$, avec $1 \leq u \leq U$, distribue le signal qu'elle reçoit aux P étages récepteurs $RE_1$ à $RE_P$ respectivement à travers des circuits pondérateurs $CPR_{1,u}$ à $CPR_{P,u}$.

Les U circuits pondérateurs $CPR_{p,1}$ à $CPR_{p,U}$ reliés à un étage récepteur $RE_p$, avec $1 \leq p \leq P$, pondèrent l'amplitude et/ou la phase des signaux captés par les antennes $AR_1$ à $AR_U$ respectivement par des coefficients de pondération complexes $v_{p,1}$ à $v_{p,U}$ définissant l'orientation angulaire d'un diagramme de réception respectif. L'étage récepteur $RE_p$ est associé à une case de positionnement angulaire de cellules radars couvertes par au moins un lobe principal du diagramme de réception respectif. A cet égard, comme montré à la figure 6, l'étage récepteur $RE_p$ comprend N discriminateurs parallèles $DIS_{p,1}$ à $DIS_{p,N}$ pour discriminer en signal de base et temps de propagation bistatique dans l'ensemble des signaux pondérés reçus essentiellement dans une zone de réception respective. Chaque discriminateur $DIS_{p,n}$ de l'étage récepteur $RE_p$ est associé à un signal de base $SB_n$ en tant que signal de référence Sref pour discriminer dans le fouillis des signaux pondérés reçus suivant la zone de réception, les cellules radars d'une part ayant un temps de propagation bistatique constant et donc une distance bistatique constante, d'autre part pour un temps de propagation bistatique donné, les cellules radars siamoises associées au signal de base $SB_n$ parmi les signaux de base $SB_1$ à $SB_N$ discriminables par leurs propriétés d'orthogonalité. Les discriminateurs $DIS_{p,1}$ à $DIS_{p,N}$ distinguent ainsi les cellules radars associées aux signaux de base $SB_1$ à $SB_N$ suivant une zone de réception respective et pour des temps de propagation bistatiques différents.

Chacun des discriminateurs $DIS_{1,n}$ à $DIS_{P,n}$ dans le système de réception SRE sélectionne les lobes principaux $LP_n$ du diagramme feuilleté propre au signal de base $SB_n$ grâce aux première et deuxième propriétés d'orthogonalité des signaux de base $SB_1$ à $SB_N$. Le système de réception connaît a priori les signaux de base $SB_1$ à $SB_N$, par exemple comme des séquences numériques prédéterminées, qui en tant que signaux de référence sont lus périodiquement en mémoire du système de réception et appliqués respectivement aux discriminateurs. En mettant en oeuvre la première propriété d'orthogonalité relative à l'orthogonalité des signaux de base deux à deux, chacun des discriminateurs $DIS_{1,n}$ à $DIS_{P,n}$ fonctionnant par exemple comme un corrélateur ou un dispositif de convolution sélectionne le signal de base $SB_n$ dans le signal mélangé reçu par l'étage récepteur respectif $RE_1$ à $RE_P$, indépendamment du fait que le signal mélangé contienne tout ou partie des autres signaux de base reçus $SB_1$ à $SB_{n-1}$ et $SB_{n+1}$ à $SB_N$. Les discriminateurs $DIS_{1,n}$ à $DIS_{P,n}$ sélectionnent ainsi les cellules radar à l'intersection des lobes de rayonnement principaux d'émission $LP_n$ et de la zone de réception ZR recouverte par les diagrammes de réception.

Dans le cas d'une détection selon la technique antérieure avec un système radar monostatique localisé au site de réception, la cellule de réception est limitée par le lobe principal du réseau de réception et la résolution temporelle.

Dans la figure 1, la zone de réception ZR a été choisie voisine du lobe principal du diagramme de réception utilisé selon la technique antérieure. La résolution temporelle selon la technique antérieure est plus faible que celle atteinte dans l'invention puisque les signaux connus utilisés ne confèrent pas les performances de détection que l'on obtient avec les signaux de base utilisés dans l'invention. Les lobes principaux des diagrammes d'émission feuilletés selon l'invention conjugués aux signaux de base utilisés dans l'invention contribuent à réduire la résolution temporelle d'un facteur Kr de l'ordre de 3 à 5 et par le même facteur la dimension des cellules radars obtenues avec l'invention. Une cellule radar obtenue selon la technique antérieure est représentée dans la figure 1 à l'intersection de l'espace entre la zone de réception ZR et deux demi-cercles centrés sur le système récepteur SRE et distant d'un incrément de résolution distance de 15 km par exemple.

La figure 4 montre partiellement un exemple de pavage de cellules radars obtenu selon l'invention avec les hypothèses prises pour la figure 1, par l'utilisation de l'ensemble des signaux de base et du traitement associé dans le système radar SEM-SRE. Le pavage partiel est à l'intersection de la zone de réception ZR, d'une zone de résolution distance ellipsoïdale étendue ZDE pour un temps de propagation bistatique donné tp et de lobes principaux $LP_1$ à $LP_N$ = $LP_6$ juxtaposés et entrelacés. Afin de ne pas surcharger la figure 4, les lobes principaux $LP_1$ à $LP_N$ sont montrés sur deux périodes angulaires de N = 6 diagrammes feuilletés attribués à différents signaux de base $SB_1$ à $SB_N$ = $SB_6$. Les lobes principaux sont, comme il a été indiqué précédemment, discriminables par l'orthogonalité des signaux de base dans les discriminateurs $DIS_{1,1}$ à $DIS_{P,N}$.

Les différentes cellules radars siamoises $CES_1$ à $CES_N$ associées à un temps de propagation bistatique tp et à tous les signaux de base $SB_1$ à $SB_N$ pavent la zone de résolution distance ZD. Les cellules radars siamoises respectivement associées à des couples ($SB_1$, tp) à ($SB_N$, tp) sont séparables dès que les signaux de base auxquelles elles sont associées sont différents.

Dans la figure 4 est également représentée la zone de résolution distance étendue ZDE correspondant à un temps de propagation bistatique donné tp et une résolution distance choisie étendue à l'espace susceptible d'être surveillé. Les cellules radars siamoises $CES_n$ = $CES_1$ associées au couple ($SB_n$, tp) sont localisées à l'intersection de la zone de résolution distance étendue ZDE et des lobes principaux $LP_n$ du diagramme d'émission feuilleté associé au signal de base $SB_n$.

La même cellule radar siamoise $CES_{n,m}$ associée au couple ($SB_n$, tp) et couverte par la zone de réception ZR est propre à diffuser vers le système de réception SRE un signal:

$$Sr_{n,m} = \alpha_{nm} \times SER_{n,m} \times SB_n(tp),$$

$\alpha_{nm}$ étant un affaiblissement de propagation, et $SER_{n,m}$ la surface équivalente radar de la cellule radar siamoise $CES_{n,m}$, associée au couple ($SB_n$, tp). Ce couple définit la réplique $SB_n(tp)$ du signal $SB_n$ décalée temporellement du temps de propagation bistatique tp.

Le système de réception antennaire SRE forme, via les antennes $AR_1$ à $AR_U$ et les circuits pondérateurs $CP_{1,1}$ à $RE_{P,U}$, P diagrammes de rayonnement de réception à lobes principaux respectifs $LP_1$ à $LP_P$. Pour une zone de réception ZR contenant M cellules radars siamoises associées au couple ($SB_n$, tp), par exemple deux cellules $CES_n$ dans la figure 4, avec M ≤ P, chaque signal $S_p$ capté par le réseau d'antennes de réception $AR_1$ à $AR_U$ pour le p-ème diagramme de réception traité par l'étage récepteur $RE_p$, avec 1 ≤ p ≤ P, s'exprime par :

$$S_p = \sum_{m \in M} G_p\ (\theta r_{n,m},\ \varphi r_{n,m})\ \times\ Sr_{n,m}\ +\ T(SB_e,\ tp_e).$$

($\theta r_{n,m}$, $\varphi r_{n,m}$) est la direction angulaire en azimut $\theta r_{n,m}$ et zénith $\varphi r_{n,m}$ de la m-ème cellule radar siamoise $CES_{n,m}$ associée au couple ($SB_n$, tp). $G_p$ ($\theta r_{nm}$, $\varphi r_{nm}$) est le gain du p-ème diagramme de rayonnement de réception suivant la direction azimutale et zénithale ($\theta r_{n,m}$, $\varphi r_{n,m}$). Le signal T ($SB_e$, $tp_e$) représente la somme de tous les signaux reçus par le système de réception antennaire et susceptibles d'être rétrodiffusés par des cellules radars illuminées par des diagrammes d'émission associés à des signaux de base $SB_1$ à $SB_{n-1}$ et $SB_{n+1}$ à $SB_N$ autres que le signal $SB_n$ et par des cellules radars illuminées par le diagramme associé au signal de base $SB_n$ et situées en correspondance à des temps de propagation bistatiques $tp_e$ différents du temps de propagation donné tp.

Les discriminateurs $DIS_{1,n}$ à $DIS_{P,n}$ utilisant le signal de base $SB_n$ comme signal de référence éliminent par la première propriété d'orthogonalité précédemment définie les cellules radars contribuant à la formation du signal T ($SB_e$, $tp_e$) associé à un ou plusieurs signaux de base autres que le signal $SB_n$. Pour le temps de propagation bistatique donné tp, les discriminateurs $DIS_{1,n}$ à $DIS_{P,n}$ éliminent aussi les cellules radars contribuant à la formation du signal T ($SB_e$,

$tp_e$) et associées au signal de base $SB_n$ et à des temps de propagation bistatiques $tp_e$ autres que le temps de propagation bistatique donné tp, en appliquant la deuxième propriété d'orthogonalité précédemment définie, par exemple fondée sur une autocorrélation, selon laquelle chaque signal de base est orthogonal à lui-même décalé temporellement.

Les deux propriétés d'orthogonalité peuvent être obtenues avec des familles de séquences de symbole codées constituant périodiquement et respectivement les signaux de base $SB_1$ à $SB_N$, telles que la fonction d'intercorrélation entre les séquences soit strictement nulle, quel que soit le décalage temporel entre les séquences et le caractère parfait ou quasiment parfait des fonctions d'intercorrélation et d'autocorrélation appliquées sur les signaux de base reçus dans les discriminateurs. Les séquences sont émises cycliquement en modulant une porteuse commune dans le système d'émission SEM. Une fonction de corrélation d'une séquence est dite quasiment parfaite si la fonction de corrélation n'est pas nulle pour tout point qui diffère du pic central à décalage nul de la séquence et de quelques points régulièrement espacés sur la fonction de corrélation d'un nombre prédéterminé de symboles. A titre d'exemple, les séquences GQ (Goutelard Q-aires séquences) construites selon l'article "LES SEQUENCES GQ SEQUENCES Q-AIRE ORTHOGONALES A CORRELATION PARFAITE", C. GOUTELARD, AGARD CONFERENCE PROCEEDINGS 574, SPP Symposium, "Digital Communications Systems : Propagation Effects, Technical Solutions, Systems Design", Athènes, Grèce, 18-21 Septembre 1995, CP-574, satisfont aux première et deuxième propriétés d'orthogonalité.

Les discriminateurs $DIS_{1,n}$ à $DIS_{P,n}$ associés au signal de base $SB_n$ réalisent par exemple une corrélation, ou une opération équivalente, comme par exemple une convolution. Le discriminateur $DIS_{P,n}$ délivre un signal normalisé $R_{p,n}$ du type :

$$R_{p,n} = \sum_{m \in M} Kop \times G_p(\theta r_{n,m}, \ \varphi r_{n,m}) \times \alpha_{n,m} \times SER_{n,m},$$

Kop étant un coefficient de transformation de l'opérateur mathématique dans les discriminateurs $DIS_{1,n}$, à $DIS_{P,n}$ entre le signal $S_p$ et le signal $R_p$.

Pour le temps de propagation bistatique donné tp, les discriminateurs $DIS_{1,n}$ à $DIS_{P,n}$ fournissent un système de P équations correspondant aux P signaux $R_{1,n}$ à $R_{P,n}$ mesurés avec les P diagrammes de rayonnement de réception, ayant M inconnues $\alpha_{n,1} \times SER_{n,1}$ à $\alpha_{n,M} \times SER_{n,M}$ correspondant aux cellules radars siamoises $CES_{n,1}$ à $CES_{n,M}$ associées au couple ($SB_n$, tp) et comprises dans la zone de réception surveillée, le nombre P étant égal ou supérieur à M. Si P = M, le système d'équations est déterminé et constitue un système de Cramer. Si P > M, le système d'équations est surdéterminé et peut être exploité pour accroître la précision des calculs.

Pour chacun des temps de propagation bistatiques et donc pour chacune des distances bistatiques, les discriminateurs $DIS_{1,n}$ à $DIS_{P,n}$ fournissent un système de P équations correspondant aux P signaux $R_{1,n}$ à $R_{P,n}$ mesurés avec les P diagrammes de rayonnement de réception, ayant autant d'inconnues que de cellules radars siamoises qui sont associées au couple du signal de base $SB_n$ et dudit chacun des temps de propagation bistatiques et comprises dans la zone de réception surveillée. Le nombre P est égal ou supérieur au nombre de cellules radars siamoises précitées.

Plus généralement, tous les signaux $R_{1,1}$ à $R_{P,N}$ fournis par les discriminateurs $DIS_{1,1}$ à $DIS_{P,N}$ servent à déterminer tous les signaux de base renvoyés par les cellules siamoises illuminées par les lobes principaux $LP_1$ à $LP_N$ des diagrammes d'émission et situées dans la zone de réception ZR.

Selon diverses réalisations, le système de réception peut couvrir une zone de réception ZR plus ou moins étendue.

Dans la réalisation illustrée à la figure 1, la zone de réception ZR est limitée à une partie de la zone à surveiller et l'exploration de la zone de réception surveillée est explorée par le système de réception antennaire SRE par un ensemble de Q zones de réception pavant la zone surveillée en totalité. Q systèmes d'équations linéaires sont à résoudre.

Dans la réalisation illustrée à la figure 4, la zone de réception ZR est étendue à toute la zone de réception surveillée. Un seul système d'équations linéaires (Q=1) est à résoudre.

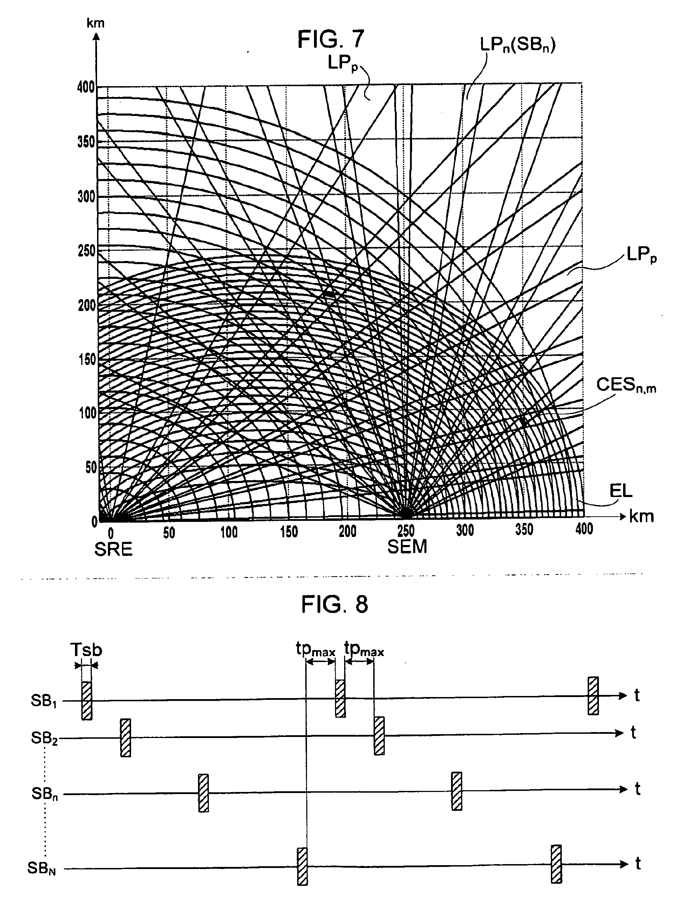

Dans la réalisation illustrée à la figure 7, la zone de réception surveillée ZR est réalisée avec un ensemble de diagrammes feuilletés à la réception dont les lobes principaux LPp d'un seul alternés avec des lobes de rayonnement secondaires sont représentés. Les antennes dans le système de réception peuvent constituer un réseau lacunaire ou un réseau produisant des diagrammes de rayonnement ambigus. Des lobes principaux des diagrammes de rayonnement de réception feuilletés sont sensiblement juxtaposés pour couvrir la zone de réception surveillée, d'une manière analogue à la juxtaposition des lobes principaux des diagrammes d'émission feuilletés montré la figure 4. Cette solution augmente le nombre Q de systèmes d'équations linéaires, mais réduit le nombre d'inconnues de chaque système d'équations. Les lobes principaux de chaque diagramme d'émission peuvent être en nombre quelconque ou réduit à un seul.

Les dimensions du système de réception antennaire SRE varient en fonction de la solution adoptée.

Dans la figure 1, on a représenté une zone de réception ZR dont la dimension est typiquement celle d'un lobe principal de réception d'un système de réception selon la technique antérieure. Dans la figure 4, on dénombre M = 12 cellules radars siamoises associées au couple (SB$_n$ = SB$_1$, tp) dans le quadrant délimité par la figure 4.

Les dimensions de la zone de réception demeurent inchangées, mais la taille des cellules radars selon l'invention est réduite par rapport à la technique antérieure, soit M × N= 72 selon la figure 4. Cette réduction selon l'invention peut atteindre plusieurs centaines.

L'invention fait appel à des signaux de base qui doivent posséder les première et deuxième propriétés d'orthogonalité précitées. Tout signal possédant ces propriétés d'orthogonalité peut être utilisé dans l'invention pour former une famille de signal de base.

Le diagramme temporel de la figure 8 montre une deuxième réalisation pour que le système d'émission SEM émette des signaux de base ayant les première et deuxième propriétés d'orthogonalité.

Au début d'un cycle de N périodes, le système d'émission émet un signal de base SB$_1$ de durée Tsb suivi d'un signal nul dont la durée est égale, ou supérieure, au temps de propagation bistatique maximum tp$_{max}$ pour couvrir la zone de réception surveillée. Puis au cours de la période suivante, le système d'émission émet un signal de base SB$_2$ suivi d'une durée au moins égale à tp$_{max}$, puis les autres signaux de base séparés temporellement deux à deux d'au moins tp$_{max}$ jusqu'au dernier signal de base SB$_N$. Un autre cycle d'émissions successives des signaux de base débute ensuite semblable à celui décrit précédemment.

La double condition d'orthogonalité est respectée.

La première orthogonalité est respectée par la séparation temporelle des diagrammes d'émission feuilletés qui sont associés aux signaux SB$_1$ à SB$_N$ et n'apparaissent qu'à des instants différents, quel que soit l'instant. Le système de réception ne peut recevoir qu'un seul signal de base non nul à la fois. Dans ce cas, les signaux SB$_1$ à SB$_N$ peuvent être identiques à un même signal qui présente la deuxième orthogonalité.

La deuxième orthogonalité est respectée si chaque signal de base non nul possède cette propriété, c'est-à-dire si ses répliques sont séparables dans le temps. Cette propriété est satisfaite pour un grand nombre de séquences, mais également pour une simple impulsion isolée. Le signal de base non nul SB$_1$ à SB$_N$ peut être constitué d'une séquence ou d'une suite de séquences identiques ou non, ou d'une impulsion isolée, ou d'une suite d'impulsions isolées.

Outre une réduction importante d'une cellule radar, l'invention procure une amélioration importante des performances de tout système de détection, électromagnétique ou acoustique, qui est confronté au problème de la détection d'une cible dont la signature doit être extraite d'un signal contenant un fouillis dépendant de la dimension de la cellule radar du système de détection. L'invention procure également un gain important quant à la discrimination spatiale des cibles pouvant être présentes dans la zone de réception surveillée.

L'invention trouve des applications nombreuses dans tous les systèmes de détection électromagnétiques tels que les radars, les sonars, les systèmes de radiolocalisation, les systèmes de sondage de canaux, les systèmes de radiographie médicale et les systèmes de radiographie industrielle notamment.

Les avantages offerts sont particulièrement importants dans les cas où il est impossible, quelle qu'en soit la raison, de donner aux systèmes antennaires, essentiellement au système de réception antennaire bien souvent le plus encombrant, des dimensions qu'il devrait avoir pour atteindre les résolutions obtenues avec l'invention et qui ne pourraient être atteintes dans la technique antérieure, qu'au prix de l'accroissement considérable, d'un facteur de plusieurs dizaines, des dimensions du système de réception antennaire.

L'invention décrite ici concerne un procédé d'émission et de réception et des systèmes d'émission et de réception pour émettre des signaux de base présentant des propriétés d'orthogonalité par des antennes dans le système d'émission et plusieurs antennes de réception dans le système de réception pour recevoir les signaux de base. Selon une implémentation, le procédé d'émission et de réception selon l'invention est déterminé par les instructions de programmes d'ordinateur incorporés dans les systèmes d'émission et de réception. Les programmes comportent des instructions de programme qui, lorsque lesdits programmes sont exécutés dans les systèmes d'émission et de réception dont le fonctionnement est alors commandé notamment par l'exécution des programmes, réalisent le procédé d'émission et de réception selon l'invention.

En conséquence, l'invention s'applique également à des programmes d'ordinateur, notamment des programmes d'ordinateur enregistrés sur ou dans un ou des supports d'enregistrement lisibles par un ordinateur et tout dispositif de traitement de données, adaptés à mettre en oeuvre l'invention. Ces programmes peuvent utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Un support d'enregistrement peut être n'importe quelle entité ou dispositif capable de stocker les programmes.

**Revendications**

**1.** Procédé de télédétection pour émettre des signaux de base (SB$_1$, SB$_N$) présentant des propriétés d'orthogonalité par des antennes d'émission ($AE_1$, $AE_s$) dans un système d'émission (SEM) et recevoir les signaux de base par plusieurs antennes de réception ($AR_1$. $AR_U$) dans un système de réception (SRE), **caractérisé en ce qu'**il comprend une formation de diagrammes de rayonnement d'émission pour émettre respectivement les signaux de base par toutes les antennes d'émission ($AE_1$, $AE_S$), chaque diagramme de rayonnement d'émission étant associé à un signal de base respectif ($SB_n$) à émettre par toutes les antennes d'émission et comprenant des lobes de rayonnement principaux ($LP_1$, $LP_N$) alternés avec des lobes de rayonnement secondaires (LS), les lobes de rayonnement principaux des diagrammes de rayonnement d'émission étant sensiblement alternés et juxtaposés dans l'espace, et une formation de diagrammes de rayonnement de réception dans une zone de réception (ZR) afin de recevoir les signaux de base par chacune des antennes de réception ($AR_1$, $AR_U$) et sélectionner les lobes principaux ($LP_n$) du diagramme de rayonnement d'émission associé à un signal de base ($SB_n$) grâce aux propriétés d'orthogonalité des signaux de base ($SB_1$, $SB_N$), le nombre de diagrammes de rayonnement de réception étant au moins égal au nombre de cellules ($CES_{n,m}$) qui sont contenues dans la zone de réception, qui sont couvertes par les lobes de rayonnement principaux ($LP_n$) de l'un des diagrammes de rayonnement d'émission et qui sont situées à une distance bistatique donnée des systèmes d'émission et de réception.

2. Procédé conforme à la revendication 1, selon lequel les signaux de base sont orthogonaux deux à deux.

3. Procédé conforme à la revendication 1 ou 2, selon lequel chaque signal de base est orthogonal à lui-même décalé temporellement.

4. Procédé conforme à l'une des revendications 1 à 3, comprenant des émissions des signaux de base successives et cycliques.

5. Procédé conforme à l'une des revendications 1 à 4, selon lequel les diagrammes de réception recouvrent la zone de réception (ZR).

6. Procédé conforme à la revendication 5, selon lequel au moins l'un des diagrammes de réception a plusieurs lobes principaux alternés avec des lobes de rayonnement secondaires.

7. Procédé conforme à l'une des revendications 1 à 6, comprenant dans le système de réception (SRE)
des pondérations des signaux captés par les antennes de réception ($AR_1$, $AR_U$), le signal capté par une antenne de réception étant pondéré pour produire autant de signaux pondérés que de diagrammes de rayonnement de réception,
une discrimination en signal de base et distance bistatique dans l'ensemble des signaux pondérés pour discriminer d'une part des cellules ayant une distance bistatique constante, d'autre part pour une distance bistatique donnée, des cellules associées à l'un ($SB_n$) des signaux de base discriminables par leurs propriétés d'orthogonalité.

8. Systèmes d'émission et de réception pour de la télédétection comprenant plusieurs antennes d'émission ($AE_1$, $AE_S$) pour émettre des signaux de base ($SB_1$, $SB_N$) présentant des propriétés d'orthogonalité et plusieurs antennes de réception ($AR_1$, $AR_U$) pour recevoir les signaux de base, **caractérisés en ce que**
le système d'émission (SEM) comprend un moyen (EM, CPE) pour former des diagrammes de rayonnement d'émission pour émettre respectivement les signaux de base par toutes les antennes d'émission ($AE_1$, $AE_S$), chaque diagramme de rayonnement d'émission étant associé à un signal de base respectif ($SB_n$) à émettre par toutes les antennes d'émission et comprenant des lobes de rayonnement principaux ($LP_1$, $LP_N$) alternés avec des lobes de rayonnement secondaires (LS), les lobes de rayonnement principaux des diagrammes de rayonnement d'émission étant sensiblement alternés et juxtaposés dans l'espace, et
le système de réception (SRE) comprend un moyen (CPR) pour former des diagrammes de rayonnement de réception dans une zone de réception (ZR) afin de recevoir les signaux de base par chacune des antennes de réception ($AR_1$, $AR_U$) et sélectionner les lobes principaux ($LP_n$) du diagramme de rayonnement d'émission associé à un signal de base ($SB_n$) grâce aux propriétés d'orthogonalité des signaux de base ($SB_1$, $SB_N$), le nombre de diagrammes de rayonnement de réception étant au moins égal au nombre de cellules ($CES_{n,m}$) qui sont contenues dans la zone de réception, qui sont couvertes par les lobes de rayonnement principaux ($LP_n$) de l'un des diagrammes de rayonnement d'émission et qui sont situées à une distance bistatique donnée des systèmes d'émission et de réception.

9. Systèmes d'émission et de réception conformes à la revendication 8, dans lequel le système de réception (SRE) comprend
des moyens ($CPR_{1,1}$, $CPR_{P,U}$) pour pondérer des signaux captés par les antennes de réception ($AR_1$, $AR_U$), le signal capté par une antenne de réception ($AR_u$) étant pondéré pour produire autant de signaux pondérés que de diagrammes de rayonnement de réception, et

des moyens ($DIS_{p,n}$) pour discriminer en signal de base et distance bistatique dans l'ensemble des signaux pondérés, d'une part des cellules ayant une distance bistatique constante, d'autre part pour une distance bistatique donnée, des cellules associées à l'un ($SB_n$) des signaux de base discriminables par leurs propriétés d'orthogonalité.

10. Programmes d'ordinateur aptes à être mis en oeuvre respectivement dans un système d'émission (SEM) comprenant plusieurs antennes d'émission ($AE_1$, $AE_s$) pour émettre des signaux de base ($SB_1$, $SB_N$) présentant des propriétés d'orthogonalité et dans un système de réception (SRE) comprenant plusieurs antennes de réception ($AR_1$, $AR_U$) pour recevoir les signaux de base, lesdits programmes étant **caractérisés en ce qu'**ils comprennent des instructions qui, lorsque les programmes sont exécutés dans le système d'émission et le système de réception, commandent les étapes du procédé conforme à l'une des revendications 1 à 7.

**Claims**

1. Remote sensing method for emitting basic signals ($SB_1$, $SB_N$) having orthogonality properties by emission antennas ($AE_1$, $AE_S$) in an emission system (SEM) and receiving the basic signals by a plurality of reception antennas ($AR_1$, $AR_U$) in a reception system (SRE), **characterised in that** it comprises:

   forming emission radiation charts for emitting respectively basic signals by all the emission antennas ($AE_1$, $AE_S$), each emission radiation chart being associated with a respective basic signal ($SB_n$) to be emitted by all the emission antennas and comprising main radiation lobes ($LP_1$, $LP_N$) alternating with secondary radiation lobes (LS), the main radiation lobes of the emission radiation charts substantially alternating and being juxtaposed in space, and
   forming reception radiation charts in a reception area (ZR) so as to receive the basic signals ($AR_1$, $AR_U$) by each one of the reception antennas and select the main lobes ($LP_n$) of the emission radiation chart associated with a basic signal ($SB_n$) owing to orthogonality properties of the basic signals ($SB_1$, $SB_N$), the number of reception radiation charts being at least equal to the number of cells ($CES_{n,m}$) contained in the reception area, that are covered by the main radiation lobes ($LP_n$) of one of the emission radiation charts and that are located at a given bistatic distance from the emission and reception systems.

2. Method according to claim 1, wherein the basic signals are orthogonal two by two.

3. Method according to claim 1 or claim 2, wherein each basic signal is orthogonal to itself offset in time.

4. Method according to any one of claims 1 to 3, comprising successive and cyclic emissions of basic signals.

5. Method according to any one of claims 1 to 4, wherein the reception charts cover the reception area (ZR).

6. Method according to claim 5, wherein at least one of the reception charts has a plurality of main lobes alternating with secondary radiation lobes.

7. Method according to any one of claims 1 to 6, comprising in the reception system (SRE):

   weighting the signals captured by the reception antennas ($AR_1$, $AR_U$), the signal captured by a reception antenna being weighted so as to produce as many weighted signals as reception radiation charts,
   discriminating in basic signal and bistatic distance in the set of weighted signals for discriminating, on the one hand, cells having a constant bistatic distance, on the other hand, for a given bistatic distance, cells associated with one ($SB_n$) of the basic signals able to be discriminated by their orthogonality properties.

8. Emission and reception systems for remote sensing comprising a plurality of emission antennas ($AE_1$, $AE_S$) for emitting basic signals ($SB_1$, $SB_N$) having orthogonality properties and a plurality of reception antennas ($AR_1$, $AR_U$) for receiving the basic signals, **characterised in that**:

   the emission system (SEM) comprises means (EM, CPE) for forming emission radiation charts for emitting respectively basic signals by all the emission antennas ($AE_1$, $AE_S$), each emission radiation chart being associated with a respective basic signal ($SB_n$) for emitting by all the emission antennas and
   comprising main radiation lobes ($LP_1$, $LP_N$) alternating with secondary radiation lobes (LS), the main radiation lobes of the emission radiation charts substantially alternating and being juxtaposed in space, and the reception system (SRE) comprises means (CPR) for forming reception radiation charts in a reception area (ZR) so as to receive the basic signals by each one of the reception antennas ($AR_1$, $AR_U$) and select the main lobes ($LP_n$) of the emission radiation chart associated with a basic signal ($SB_n$) owing to orthogonality properties of the basic signals ($SB_1$, $SB_N$), the number of reception radiation charts being at least equal to the number of cells ($CES_{n,m}$) contained in the reception area, that are covered by the main radiation lobes ($LP_n$) of one of the emission radiation charts and that are located at a given bistatic distance from the emission and reception systems.

9. Emission and reception systems according to claim 8, wherein the reception system (SRE) comprises:

means ($CPR_{1,1}$, $CPR_{Pu}$) for weighting signals captured by the reception antennas ($AR_1$, $AR_U$), the signal captured by a reception antenna ($AR_u$) being weighted so as to produce as many weighted signals as reception radiation charts, and

means ($DIS_{p,n}$) for discriminating in basic signal and bistatic distance in the set of weighted signals, on the one hand, cells having a constant bistatic distance, on the other hand, for a given bistatic distance, cells associated with one ($SB_n$) of the basic signals able to be discriminated by their orthogonality properties.

10. Computer programs able to be implemented respectively in an emission system (SEM) comprising a plurality of emission antennas ($AE_1$, $AE_S$) for emitting basic signals ($SB_1$, $SB_N$) having orthogonality properties and in a reception system (SRE) comprising a plurality of reception antennas ($AR_1$, $AR_U$) for receiving the basic signals, said programs being **characterised in that** they comprise instructions which, when the programmes are carried out in the emission system and the reception system, control the steps of the method according to any one of claims 1 to 7.

## Patentansprüche

1. Verfahren für Fernerfassung, um Basissignale ($SB_1$, $SB_N$), die Orthogonalitätseigenschaften aufweisen, über Sendeantennen ($AE_1$, $AE_S$) in einem Sendesystem (SEM) zu senden und Basissignale über mehrere Empfangsantennen ($AR_1$, $AR_U$) in einem Empfangssystem (SRE) zu empfangen, **dadurch gekennzeichnet, dass** es Folgendes umfasst:

- Bildung von Sendestrahlungs-Diagrammen, um die Basissignale jeweils über sämtliche Sendeantennen ($AE_1$, $AE_S$) zu senden, wobei jedes Sendestrahlungs-Diagramm einem jeweiligen Basissignal ($SB_n$) zugeordnet ist, das über sämtliche Sendeantennen zu senden ist, und Hauptstrahlungskeulen ($LP_1$, $LP_N$) umfasst, die sich mit Sekundärstrahlungskeulen (LS) regelmäßig abwechseln, wobei die Hauptstrahlungskeulen der Sendestrahlungs-Diagramme sich im Wesentlichen regelmäßig abwechseln und im Raum nebeneinanderliegen, und
- Bildung vom Empfangsstrahlungs-Diagrammen in einem Empfangsbereich (ZR), um die Basissignale über jede der Empfangsantennen ($AR_1$, $AR_U$) zu empfangen und die Hauptkeulen ($LP_n$) des Sendestrahlungs-Diagramms, das einem Basissignal ($SB_n$) zugeordnet ist, dank der Orthogonalitätseigenschaften der Basissignale ($SB_1$, $SB_N$) auszuwählen, wobei die Anzahl an Empfangsstrahlungs-Diagrammen mindestens gleich der Anzahl von Zellen ($CES_{n,\ m}$) ist, die in dem Empfangsbereich enthalten sind, die durch die Hauptstrahlungskeulen ($LP_n$) eines der Sendestrahlungs-Diagramme bedeckt sind und sich in einer bestimmten bistatischen Entfernung von den Sende- und Empfangssystemen befinden.

2. Verfahren nach Anspruch 1, wobei die Basissignale paarweise orthogonal sind.

3. Verfahren nach Anspruch 1 oder 2, wobei jedes Basissignal zeitlich versetzt zu sich selbst orthogonal ist.

4. Verfahren nach einem der Ansprüche 1 bis 3, das aufeinanderfolgende und zyklische Sendungen der Basissignale umfasst.

5. Verfahren nach einem der Ansprüche 1 bis 4, wobei die Empfangsdiagramme den Empfangsbereich (ZR) überdecken.

6. Verfahren nach Anspruch 5, wobei mindestens eines der Empfangsdiagramme mehrere Hauptkeulen hat, die sich mit Sekundärstrahlungskeulen regelmäßig abwechseln.

7. Verfahren nach einem der Ansprüche 1 bis 6, das in dem Empfangssystem (SRE) Folgendes umfasst:

- Gewichtungen der über die Empfangsantennen ($AR_1$, $AR_U$) erfassten Signale, wobei das über eine Empfangsantenne erfasste Signal gewichtet wird, um ebenso viele gewichtete Signale wie Empfangsstrahlungsdiagramme zu erzeugen,
- Unterscheidung in der Gesamtheit der gewichteten Signale nach Basissignal und bistatischer Entfernung, um einerseits Zellen mit einer konstanten bistatischen Entfernung und andererseits, bei einer bestimmten bistatischen Entfernung, Zellen, die einem ($SB_n$) der Basissignale zugeordnet sind, die durch ihre Orthogonalitätseigenschaften unterscheidbar sind, zu unterscheiden.

8. Sende- und Empfangssysteme für die Fernerfassung umfassend mehrere Sendeantennen ($AE_1$, $AE_S$) zum Senden von Basissignalen ($SB_1$, $SB_N$), die Orthogonalitätseigenschaften aufweisen, und mehrere Empfangsantennen ($AR_1$, $AR_U$) zum Empfangen der Basissignale, **dadurch gekennzeichnet, dass**

das Sendesystem (SEM) ein Mittel (EM, CPE) zur Bildung von Sendestrahlungs-Diagrammen umfasst, um die Basissignale jeweils über sämtliche Sendeantennen ($AE_1$, $AE_S$) zu senden, wobei jedes Sendestrahlungs-Diagramm einem jeweiligen Basissignal ($SB_n$) zugeordnet ist, das über sämtliche Sendeantennen zu senden ist, und Hauptstrahlungskeulen ($LP_1$, $LP_N$) umfasst, die sich mit Sekundärstrahlungskeulen (LS) regelmäßig abwechseln, wobei die Hauptstrahlungskeulen der Sendestrahlungs-Diagramme sich im Wesentlichen regelmäßig abwechseln und im Raum nebeneinanderliegen, und

das Empfangssystem (SRE) ein Mittel (CPR) zur Bildung von Empfangsstrahlungs-Diagrammen in einem Empfangsbereich (ZR) umfasst, um die Basissignale über jede der Empfangsantennen ($AR_1$, $AR_U$) zu empfangen und die Hauptkeulen ($LP_n$) des Sendestrahlungs-Diagramms, das einem Basissignal ($SB_n$) zugeordnet ist, dank der Orthogonalitätseigenschaften der Basissignale ($SB_1$, $SB_N$) auszuwählen, wobei die Anzahl an Empfangsstrahlungs-Diagrammen mindestens gleich der Anzahl von Zellen ($CES_{n,m}$) ist, die in dem Empfangsbereich enthalten sind, die durch die Hauptstrahlungskeulen ($LP_n$) eines der Sendestrahlungs-Diagramme bedeckt sind und sich in einer bestimmten bistatischen Entfernung von den Sende- und Empfangssystemen befinden.

9. Sende- und Empfangssysteme nach Anspruch 8, wobei das Aufnahmesystem (SRE) Folgendes umfasst:

- Mittel ($CPR_{1,1}$, $CPR_{P,U}$), um die über die Empfangsantennen ($AR_1$, $AR_U$) erfassten Signale zu gewichten, wobei das über eine Empfangsantenne ($AR_U$) erfasste Signal gewichtet wird, um ebenso viele gewichtete Signale wie Empfangsstrahlungsdiagramme zu erzeugen, und
- Mittel ($DIS_{p,n}$), um in der Gesamtheit der gewichteten Signale einerseits Zellen mit einer konstanten bistatischen Entfernung und andererseits, bei einer bestimmten bistatischen Entfernung, Zellen, die einem ($SB_n$) der Basissignale, die durch ihre Orthogonalitätseigenschaften unterscheidbar sind, zugeordnet sind, nach Basissignal und bistatischer Entfernung zu unterscheiden.

10. Computerprogramme, die dazu geeignet sind, in einem Sendesystem (SEM) mit mehreren Sendeantennen ($AE_1$, $AE_S$) zum Senden von Basissignalen ($SB_1$, $SB_N$), die Orthogonalitätseigenschaften aufweisen, bzw. in einem Empfangssystem (SRE) mit mehreren Empfangsantennen ($AR_1$, $AR_U$) zum Empfangen der Basissignale verwendet zu werden, wobei die Programme **dadurch gekennzeichnet sind, dass** sie Anweisungen enthalten, die, wenn die Programme in dem Sendesystem und in dem Empfangssystem ausgeführt werden, die Schritte des Verfahrens nach einem der Ansprüche 1 bis 7 steuern.

# FIG. 1

## FIG. 2

## FIG. 3

# FIG. 4

FIG. 5

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007124460 A

**Littérature non-brevet citée dans la description**

- **C. GOUTELARD.** THÉORIE FRACTALE DES GRANDS RÉSEAUX D'ANTENNES LACUNAIRES. *AGARD Conference Proceedings 528, Radiolocation Techniques, Londres,* 01 Juin 1992
- **C. GOUTELARD.** LES SEQUENCES GQ SEQUENCES Q-AIRE ORTHOGONALES A CORRELATION PARFAITE. *AGARD CONFERENCE PROCEEDINGS,* 574
- Digital Communications Systems : Propagation Effects, Technical Solutions, Systems Design. *SPP Symposium,* 18 Septembre 1995, CP-574